# EUROPÄISCHE PATENTSCHRIFT

(11) **EP 3 170 641 B1**
(45) Veröffentlichungstag und Bekanntmachung des Hinweises auf die Patenterteilung: **25.09.2019**
(21) Anmeldenummer: 15195648.9
(22) Anmeldetag: 20.11.2015
(51) Int. Cl.: B29C 33/40, B29C 33/56, B29C 33/06, B29C 33/08, B29C 35/08, B29C 35/12, B29C 39/00, B29C 39/38, B29C 67/24

(54) **VORRICHTUNG UND VERFAHREN ZUM HERSTELLEN EINER THERMOPLASTISCHEN DREIDIMENSIONALEN FORMHAUT**
DEVICE AND METHOD FOR PRODUCING A THERMOPLASTIC THREE-DIMENSIONAL MOULDED SKIN
DISPOSITIF ET PROCÉDÉ DE FABRICATION D'UNE PEAU DE CUISSON TRIDIMENSIONNELLE THERMOPLASTIQUE

(43) Veröffentlichungstag der Anmeldung: 24.05.2017
(73) Patentinhaber: SMP Deutschland GmbH, 79268 Bötzingen (DE)
(72) Erfinder: Nogaret, Eric, 68600 Biesheim (FR)
(74) Vertreter: Westphal, Mussgnug & Partner Patentanwälte mbB

(56) Entgegenhaltungen:
- DE-A1-102004 059 066
- JP-A- H01 115 610
- US-A1- 2007 063 378

## Beschreibung

Die vorliegende Erfindung betrifft eine Vorrichtung zum Herstellen einer Formhaut, insbesondere zum Herstellen einer dreidimensionalen, thermoplastischen Formhaut, sowie ein Verfahren zum Herstellen einer Formhaut, insbesondere einer dreidimensionalen thermoplastischen Formhaut.

Innenverkleidungsbauteile für Kraftfahrzeuge werden heute in der Regel aus Kunststoff gefertigt und besitzen häufig eine mehrschichtige Struktur aus mindestens einem Trägerbauteil und einer Oberflächenschicht. Dabei handelt es sich meist um spritzgegossene Kunststoffbauteile, bei denen als Oberflächenschicht oder Dekorschicht häufig Formhäute, Gewebe, Textilstoffe, Leder oder Kunststoffe eingesetzt werden.

Beim konventionellen Slush-Molding-Verfahren erfolgt die Materialerwärmung beispielsweise über eine sehr lange Medienkette mit beispielsweise einer Ölaufheizung, die durch Leitungen die Galvanoschale und über die Galvanoschale erst das Produkt erhitzt. Will man den Energieverbrauch senken, wird die Erwärmung oft inhomogen. Folge davon ist eine ineffektive Aufheizung, verbunden mit einem hohen Anlagenstundensatz. Ein weiteres Problem ist die Herstellung von komplizierten, hinterschnittenen Kunststoffbauteilen, wie beispielsweise Slush-Häuten, oder als Formhäuten ausgebildeten Dekorteilen, die mit einfachen Formwerkzeugen nicht ohne weiteres hergestellt werden können.

Eine Vorrichtung und ein Verfahren zum Herstellen einer Formhaut sind beispielsweise aus der DE 10 2004 059066 A1 bekannt.

Die DE 35 26 171 beschreibt ein Verfahren zur Herstellung eines Formlings, zum Beispiel eines Zierteils, bei welchem das Beheizen dielektrisch, vorzugsweise mit hoher Frequenz erfolgt. Hierdurch sollen Kunststoffformteile mit Metallteilen einstückig verbunden werden. Der Effekt der dielektrischen Aufheizung wird für das Verbinden eines Metallteils mit einem Kunststoffteil verwendet. Dabei wird das Ausgangsmaterial zusammen mit einem damit zu verbindenden Metallteil in ein Formwerkzeug verbracht. Dann werden entweder der Formling oder das zu verbindende Teil oder der Formling und das Teil dielektrisch erhitzt. Das Material des Formlings ist dabei ein unter dielektrischer Beheizung selbst Wärme erzeugendes Kunstharz wie beispielsweise Polyvinylchlorid, Polyvinylidemchlorid, Nylon oder Polyurethan. Es kann sowohl in Pulverform, als auch in Körnchen- oder Kügelchenform eingebracht werden und wird durch den Aufheizvorgang geschmolzen. Die Form selbst kann auch aus einem Silikonkautschuk oder einem Keramikwerkstoff gebildet sein.

Die dielektrische Aufheizung kann inhomogen sein, insbesondere dann, wenn der zu erhitzende Kunststoff an unterschiedlichen Stellen des Formlings stark unterschiedliche Dicken aufweist.

Aufgabe der vorliegenden Erfindung ist es daher, eine Vorrichtung zum Herstellen einer Formhaut, insbesondere zum Herstellen einer dreidimensionalen, thermoplastischen Formhaut bereitzustellen, welche diese Nachteile nicht aufweist, und die insbesondere ein homogenes und rasches Aufheizen einer zu bildenden Formhaut ermöglicht. Weiterhin ist es Aufgabe der Erfindung, ein geeignetes Verfahren zum Herstellen einer Formhaut mit einer solchen Vorrichtung anzugeben, durch welches aufwandsgünstig eine solche Formhaut hergestellt werden kann.

Die Erfindung löst diese Aufgabe mit einer Vorrichtung nach Anspruch 1 sowie einem Verfahren nach Anspruch 12. Vorteilhafte Weiterbildungen sind in den Unteransprüchen angegeben.

Die erfinderische Vorrichtung zum Herstellen einer Formhaut, insbesondere zum Herstellen einer dreidimensionalen, thermoplastischen Formhaut, weist ein Formwerkzeug mit einer ersten und einer zweiten Halbform auf, die gegeneinander öffen- und schließbar sind, wobei die erste Halbform eine Anlagefläche aufweist, die in Richtung auf die zweite Halbform weist, wenn die erste Halbform gegen die zweite Halbform geschlossen ist. Die zweite Halbform weist ein elektrischen Strom leitendes Material auf. Die Vorrichtung weist weiterhin eine an die Anlagefläche anlegbare, eine elastisch verformbaren Kunststoff aufweisende Formauflage, beispielsweise aus Silikon oder Kautschuk, auf, sowie wenigstens eine Kunststoffzuführung, durch welche Kunststoff in einen zwischen der Formauflage und der zweiten Halbform definierten Formhautraum eintragbar ist, wenn die erste Halbform gegen die zweite Halbform geschlossen ist und die Formauflage an die Anlagefläche angelegt ist. Die Kunststoffzuführung ist dabei vorzugsweise an der ersten und/oder der zweiten Halbform angeordnet. Die Formauflage kann neben einem Silikonmaterial auch noch weitere Bestandteile aufweisen.

Erfindungsgemäß zeichnet sich die Formauflage dadurch aus, dass sie wenigstens ein elektrischen Strom leitendes Mittel aufweist. Dadurch kann eine effektivere und gleichmäßige Erwärmung des Kunststoffeintrags in den Formhautraum, beispielsweise mit Hochfrequenzstrahlung erfolgen. Die Hochfrequenzstrahlung hat die Eigenschaft, ein elektrisches Feld im Formhautraum zu erzeugen und damit das flüssige Kunststoffmaterial schneller aufzuheizen. Das elektrisch leitende Mittel kann in unmittelbarer Nähe zu dem Formhautraum angeordnet sein.

Da die Formauflage elastisch und biegsam ist, ermöglicht ihre Verwendung bei der Herstellung von 3D Formhäuten auf unkomplizierte Weise die Ausbildung auch komplizierter räumlicher Strukturen mit beispielsweise Hinterschnitten und Hinterschneidungsabschnitten in der Formhaut.

Die Formauflage kann aus elastisch geformtem Kunststoff, beispielsweise aus Silikon oder aus Kautschuk bestehen. Der elastisch geformte Kunststoff kann beispielsweise mit elektrisch leitfähigen Stoffen gefüllt sein, bzw. elektrisch leitfähige Stoffe, wie beispielsweise vernickelte Graphitpartikel oder versilberte Kupfer- oder Aluminiumpartikel aufweisen. Durch einerseits eine Dickenvariation der Formauflage, andererseits durch Einstellen der Dichte der Partikel in der Formauflage kann die Intensität des elektrischen Feldes gezielt beeinflußt werden.

Die Formauflage kann alternativ oder zusätzlich eine oder mehrere elektrisch leitfähige Schichten, beispielsweise ein elektrisch leitfähiges Gewebe, vorteilhafterweise aus Kupfer, z.B. aus E-Cu57, und/oder aus Zinnbronze, z.B. aus CuSn6, und/oder aus Aluminium, z.B. aus AlMg5 aufweisen. Die elektrisch leitfähige Schicht kann dabei sowohl in der Formauflage eingebettet oder eingegossen sein, als auch auf der Oberfläche der Formauflage angebracht, beispielsweise aufgesprüht oder aufgegossen, sein.

Die Formauflage kann zusätzlich eine thermische Isolierschicht, beispielsweise eine PTFE Beschichtung, die als Film kaschiert oder gesprüht sein kann, auf ihrer Oberfläche aufweisen. Die Formauflage kann auch aus elastisch verformbarem Schaumstoff, beispielsweise aus Polyurethan, Ethylenvinylacetat oder Polyester bestehen. Auf oder in der Formauflage eingebettet kann die elektrisch leitfähige Schicht angeordnet sein. Das den elektrischen Strom leitende Mittel, beispielsweise die elektrisch leitfähige Schicht, kann aufgesprühtes elektrisch leitfähiges Material, beispielsweise Graphen sein. Die elektrisch leitfähige Schicht kann als Gewebe aus Kupfer, z.B. A-Cu57 oder Zinnbronze z.B. CuSn6 oder Aluminium, z.B. AlMg5 ausgebildet sein.

Als weitere Variante könnte die Formauflage auch nur eine elektrisch leitfähige, auf ihrer Oberfläche aufgesprühte Schicht, beispielsweise eine Graphenschicht aufweisen.

Die erste Halbform weist vorteilhafterweise wenigstens eine an der Anlagefläche geöffnete, wechselweise ein- oder ausschaltbare Ansaugvorrichtung auf, die, wenn die Formauflage an die Anlagefläche angelegt ist und die Ansaugvorrichtung eingeschaltet ist, die Formauflage an der Anlagefläche festhält, so daß sie während der Formhautbildung sicher fixiert ist. Nach Erstellen der Formhaut wird die Ansaugvorrichtung abgeschaltet, damit sich die Formauflage von der ersten Halbform löst. Danach wird das Formwerkzeug geöffnet. Die Formhaut kann nun zusammen mit der Formauflage einfach von der zweiten Halbform abgelöst werden. Anschließend kann dann die Formhaut von der elastischen Formauflage getrennt werden und die Formauflage für den nächsten Formling vorbereitet werden. Damit kann die Zykluszeit zur Herstellung von Formhäuten verkürzt werden.

Die erste Halbform kann eine Patrize oder eine Matrize sein.

Das wenigstens eine, den elektrischen Strom leitende Mittel ist vorteilhafterweise ein aus Metall oder einer Metalllegierung bestehendes Gewebe und/oder eine metallische Schicht. Es kann beispielsweise auf die Formauflage aufgesprüht sein. Das Gewebe oder die metallische Schicht ist mit einem elastisch verformbaren Kunststoff, vorteilhafterweise mit Silikonmaterial umgossen und bildet mit dem elastisch verformbaren Kunststoff zusammen die Formauflage. Das wenigstens eine den elektrischen Strom leitende Mittel kann jedoch auch ein elektrisch leitfähiges Additiv sein, welches einem elastisch verformbaren Kunststoff, beispielsweise einem Silikonmaterial zugefügt bzw. beigemischt worden ist. Ist das elektrischen Strom leitende Mittel ein Gewebe oder ein elektrisch leitfähiges Additiv, so bleibt die Formauflage elastisch und biegsam und kann somit auch leicht von der fertiggestellten Formhaut wieder abgezogen werden.

Zum Herstellen einer Formhaut mit einer solchen Vorrichtung wird zunächst die Formauflage an die Anlagefläche der ersten Halbform des Formwerkzeugs oder an die zweite Halbform des Formwerkzeugs angelegt und das Formwerkzeug anschließend geschlossen, wobei sich durch das Schließen der ersten Halbform gegen die zweite Halbform und/oder der zweiten Halbform gegen die erste Halbform der Formhautraum zwischen der zweiten Halbform und der Formauflage bildet. Dann wird, vorzugsweise flüssiges, Kunststoffmaterial durch die Kunststoffzuführung in den Formhautraum eingetragen. Im Anschluss daran wird das Kunststoffmaterial in dem Formhautraum durch das elektrische Feld, vorzugsweise bis zum vollständigen Ausreagieren des Kunststoffmaterials, aufgeheizt, dann abgekühlt und dabei ausgehärtet. Es entsteht hierbei die Formhaut in ihrer endgültigen Form. Danach wird das Formwerkzeug geöffnet und die Formhaut mit der Formauflage aus dem Formwerkzeug entnommen. Zum Schluss wird die Formauflage von der Formhaut abgelöst.

Das verwendete Kunststoffmaterial kann beispielsweise ein Plastisol sein. Es besteht vorteilhaferweise aus Polyvinychlorid, kann jedoch auch aus einem anderen Kunststoffmaterial, wie beispielsweise einem Polyamid wie Nylon oder einem Polyurethan, bestehen.

Unter einem Plastisol versteht man eine physikalische Mischung aus einem pulverförmigen thermoplastischen Polymer, Weichmachern und Pigmenten sowie gegebenenfalls Füllstoffen, Treibmitteln und Additiven. Die Auswahl der Mischung erfolgt in der Weise, dass das Polymer im Weichmacher zwar löslich ist, die Lösungsgeschwindigkeit bei Raumtemperatur jedoch verschwindend klein ausfällt. Erst bei Temperaturen oberhalb von 55°C bis 200°C beginnt das Polymer, sich in dem Weichmacher merklich zu lösen. Dieser Vorgang wird als Gelierung oder Gelieren des Plastisols bezeichnet. Die so entstehende Lösung ist von extrem hochviskoser Konsistenz und bei Raumtemperatur nicht mehr fließfähig. Der Schritt der Gelierung ist nicht reversibel. Ist das Plastisol erst einmal aufgeheizt worden, und dann wieder auf Raumtemperatur abgekühlt worden, ist es ein geformter, fester, zähelastischer Kunststoff.

Ein ungetempertes Plastisol liegt bei Raumtemperatur noch als flüssige Paste vor und ist gieß-, spritz- und streichfähig. Je nach Zusammensetzung ist die Mischung über lange Zeit lagerstabil und formbar, ohne zu gelieren. Nach Erwärmung über einige Minuten bei typischerweise 160°C bis 180°C wird das Plastisol zu einem dauerhaft zähelastischen Kunststoff. Der Begriff "Plastisol" wird für die ungehärtete Mischung verwendet. Plastisole lassen sich aus verschiedenen Polymeren herstellen, wobei von Bedeutung vor allem die PVC-Plastisole sind, die auch bekannt sind als Weich-PVC und die dielektrische Eigenschaften aufweisen und somit durch Hochfrequenzstrahlung erhitzt werden können.

In einer bevorzugten Ausführungsform weist die Vorrichtung eine an der Anlagefläche der ersten Halbform geöffnete, wechselweise ein- oder ausschaltbare Ansaugvorrichtung zum Festhalten der Formauflage auf. Bei dieser Ausführungsform wird vorzugsweise die wenigstens eine Ansaugvorrichtung nach dem Bilden des Formhautraums und vor dem Eintragen des flüssigen Kunststoffmaterials in den Formhautraum eingeschaltet, so daß die Formauflage an der Anlagefläche festgehalten wird, während die Formhaut gebildet wird. Nach Herstellung der Formhaut und Abschaltung der Ansaugvorrichtung wird das Werkzeug geöffnet. Im Anschluß daran kann die Formauflage von der zweiten Halbform abgenommen werden und schließlich die Formauflage von der Formhaut getrennt werden, da die Formauflage leicht entformbar und von der Formhaut trennbar ist. Auf diese Weise bleiben die eventuell vorgesehenen Hinterschneidungen in der Formhaut erhalten.

Vorteilhafterweise kann an den Formhautraum ein Vakuumkanal angeschlossen sein, so dass er gezielt mit Unterdruck beaufschlagt werden kann bevor und/oder während das Kunststoffmaterial in den Formhautraum eingebracht wird. Dadurch wird es möglich, den gesamten Formhautraum mit dem Kunststoffmaterial homogen aufzufüllen. Auf diese Weise kann eine mögliche Blasenbildung oder Lunkerbildung in der Formhaut wirksam vermieden werden.

Im Gegensatz zum Spritzgießverfahren, bei dem mit einer Spritzgießmaschine der jeweilige Werkstoff verflüssigt, und in eine Form, dem Spritzgießwerkzeug unter Druck eingespritzt und dann fest wird, ermöglicht das hier verwendete Verfahren, wenn der Formhautraum mit Unterdruck beaufschlagt, also in Niederdruck gesetzt wird und Plastisol mit oder ohne Druck in den mit Unterdruck beaufschlagten Formhautraum eingeführt wird, die Herstellung auch sehr langer, makelloser Kunststoffteile. Das ist beispielsweise bei Instrumententafeln für Kraftfahrzeuge von besonderer Bedeutung.

Das Kunststoffmaterial ist vorzugsweise ein dielektrisches Material, beispielsweise ein Polyvinylchlorid, welches in einem elektrischen Feld aufheizbar ist, nachdem es in den Formhautraum eingebracht worden ist. Dieses Aufheizen erfolgt vorzugsweise mit einer Hochfrequenzanlage zwischen 3 MHz und 300 MHz. Die zweite Halbform kann eine genarbte Oberflächenstruktur aufweisen, oder eine in die zweite Halbform eingelegte Schale mit einer genarbten Oberflächenstruktur, beispielsweise aus Aluminium oder Nickel, aufnehmen, damit auf der Oberfläche der zu bildenden Formhaut, diese Struktur abgebildet wird, wodurch die Formhaut den Eindruck eines hochwertigen Lederkleides vermittelt.

Die Schale wird in diesem Fall in die zweite Halbform eingelegt, bevor das flüssige Kunststoffmaterial durch die Kunststoffzuführung in den Formhautraum zwischen die Schale und die Formauflage eingetragen wird. Eine solche Schale kann auch rasch ausgetauscht und beispielsweise durch eine andere Schale mit einer anderen Oberflächenstruktur ersetzt werden, was der Formvorrichtung eine hohe Flexibilität verleiht. Die Schale kann aber auch fest mit der zweiten Halbform verbunden sein.

Die Formhaut weist eine Dicke von vorzugsweise zwischen 0,5 mm und 2 mm auf, besonders vorzugsweise eine Dicke zwischen 0,7 mm und 1,4 mm. Dadurch kann eine haptisch angenehme Dekoroberfläche für ein Verkleidungsbauteil bereitgestellt werden.

Formhäute der beschriebenen Art werden vorteilhafterweise bei Fahrzeuginnenraumverkleidungen, wie beispielsweise Türverkleidungen oder Instrumententafeln, beispielsweise als Dekorelemente, verwendet.

Die in der nachfolgenden Beschreibung verwendeten Bezeichnungen, wie "oben", "unten", "links" und "rechts" und ähnliches, beziehen sich auf die Figuren und sollen in keiner Weise einschränkend sein, auch dann nicht, wenn sie sich auf bevorzugte Ausführungsformen beziehen. Gleiche Elemente in den unterschiedlichen Figuren werden dabei mit gleichen Bezugszeichen gekennzeichnet.

Die Erfindung wird nachfolgend anhand von Ausführungsbeipielen näher erläutert. Es zeigen:
- Fig. 1: eine Vorrichtung zum Herstellen einer dreidimensionalen thermoplastischen Formhaut im Schnittbild,
- Fig. 2: verschiedene Ausführungsbeispiele für Formauflagen.

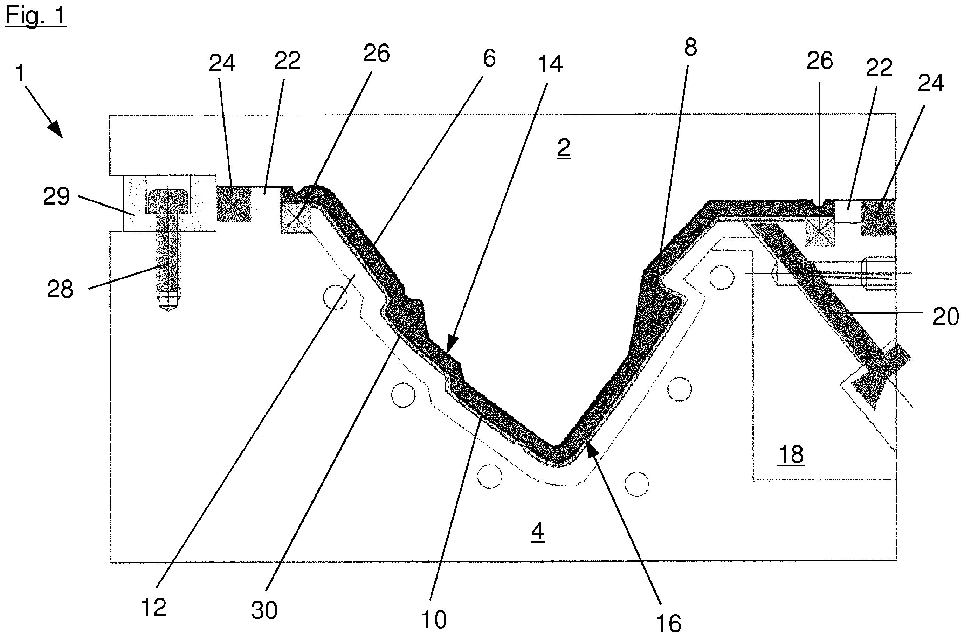

Figur 1 zeigt eine Vorrichtung 1 zum Herstellen einer Formhaut, insbesondere zum Herstellen einer dreidimensionalen thermoplastischen Formhaut. Die Vorrichtung 1 weist eine erste Halbform 2 sowie eine zweite Halbform 4 auf. An einer Anlagefläche 6 der ersten Halbform 2 ist eine nicht leitfähige Silikonform 8 angelegt, wobei die der Anlagefläche 6 gegenüber liegende Fläche der Silikonform 8 ein leitfähiges Metallgewebe 10 aufweist. An der zweiten Halbform 4 ist eine genarbte Schale 12, beispielsweise aus einem, den elektrischen Strom und/oder gut die Wärme leitenden Material, wie z.B. Aluminium oder Nickel, flächig angelegt. Die Silikonform 8 und die Schale 12 sind als Elektroden ausgebildet. Die Silikonform 8 bildet zusammen mit dem Metallgewebe 10 eine Formauflage 14, beispielsweise aus Silikon. Zwischen der Formauflage 14 und der genarbten Schale 12 ist ein mit flüssigem Kunststoff füllbarer Formhautraum 16 ausgebildet, der über eine Materialzuführungseinheit 18 mit einer Kunststoffzuführung 20 verbunden ist. Über einen Vakuumkanal 22, der ebenfalls mit dem Formhautraum 16 verbunden ist, und der mit Silikondichtungen 24, 26 abgedichtet ist, kann in dem Formhautraum 16 ein Unterdruck oder ein Vakuum erzeugt werden. Die erste Halbform 2 ist mit einem Distanzhalter 29 mit Abstand zu der zweiten Halbform 4 gehalten, so daß kein direkter elektrischer Kontakt entsteht. Die Abstandshalter sind mit Schrauben 28 fixiert. Die Silikondichtungen 24 dichten den Vakuumkanal 22 gegen die Umgebung nach außen ab.

Über die Kunststoffzuführung 20 wird in den Formhautraum 16 flüssiges Kunststoffmaterial 30 eingeleitet, wobei gegenüberliegend der Vakuumkanal 22 mit Unterdruck beaufschlagt wird. Sobald der durch die Kunststoffzuführung 20 zugeführte Kunststoff die Silikondichtung 26 erreicht, wird der Befüllvorgang beendet.

Zwischen der als Elektrode ausgebildeten Formauflage 14 und dem leitfähigen Metallgewebe 10 wird anschließend die Kunststoffschicht 30 erhitzt und dann abgekühlt, so dass das Kunststoffmaterial ausreagieren und als fertige Formhaut 30 entnommen werden kann. Danach kann die erste Halbform 2 nach erfolgtem Druckausgleich im Vakuumkanal 22 und nach Abschaltung der Ansaugvorrichtung von der zweiten Halbform 4 getrennt werden, sodass sich die zweite Halbform 4 zusammen mit der Formauflage 14 und der Formhaut 30 von der ersten Halbform 2 löst. Anschließend kann die Formauflage 14 von der zweiten Halbform zusammen mit der Kunststoffschicht 30, welche nun die 3D-Formhaut darstellt, gelöst werden und die Formauflage 14 von der Formhaut 30 getrennt werden.

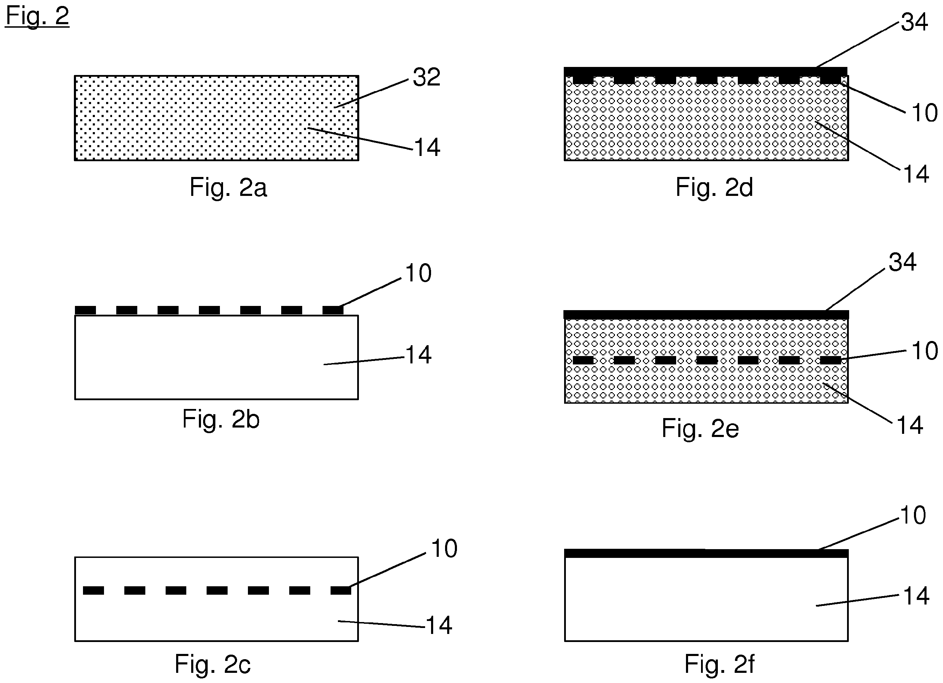

Figur 2 zeigt sechs Ausführungsbeispiele für Formauflagen 14. Die Formauflage 14 in Figur 2a besteht aus einem elastischen geformten Kunststoff, und ist vorliegend als Silikonauflage ausgebildet. Die Silikonauflage 14 ist mit elektrisch leitfähigen Partikeln 32 gefüllt, vorliegend mit versilberten Kupferpartikeln, die zusammen mit der zweiten Halbform 4 bzw. mit der genarbten Schale 12 mit Hilfe einer Hochfrequenzanlage (nicht dargestellt), die ein elektrisches Feld erzeugt, so daß sich die anliegende 3D-Formhaut 30 aus dem flüssigen Kunststoffmaterial homogen aufheizt und ausbildet.

Figur 2b zeigt eine weitere Ausführungsform für die Formauflagen 14. Auf der Oberfläche der Formauflage 14 ist in diesem Beispiel eine elektrisch leitfähige Schicht 10 angeordnet, die als ein elektrisch leitfähiges Gewebe 10, vorliegend als ein Kupfergewebe, ausgebildet ist. Die Silikonauflage 14 mit dem elektrisch leitfähigen Kupfergewebe erzeugt zusammen mit der zweiten Halbform 4 bzw. mit der genarbten Schale 12 und mit Hilfe einer Hochfrequenzanlage, ein elektrisches Feld, sodaß sich die anliegende 3D-Formhaut 30 aus dem flüssigen Kunststoffmaterial homogen aufheizt und ausbildet.

Eine alternative Ausführungsvariante zeigt Figur 2c. Hier ist die elektrisch leitfähige Schicht 10 in der Formauflage eingebettet oder eingegossen.

Figur 2d zeigt ein viertes Ausführungsbeispiel. Die Formauflage 14 weist auf ihrer Oberfläche zusätzlich eine thermische Isolierschicht 34 auf, die beispielsweise als PTFE Beschichtung ausgebildet sein kann. Die Formauflage 14 besteht vorliegend aus elastisch verformbarem Schaumstoff, beispielsweise aus Polyurethan, Ethylenvinylacetat oder Polyester. Eine als Metallgewebe 10 ausgebildete elektrisch leitfähige Schicht ist auf der Oberfläche der Formauflage 14 direkt unterhalb der thermischen Isolierschicht 34 angeordnet.

Figur 2e unterscheidet sich von Figur 2d dadurch, daß die als Metallgewebe ausgebildete elektrisch leitfähige Schicht 10 in der Formauflage 14 eingegossen ist.

Figur 2f zeigt in einem weiteren Ausführungsbeispiel eine aus Silikon bestehende Formauflage 14. Auf der Oberfläche der Formauflage 14 ist eine elektrisch leitfähige, vorzugsweise metallische, Schicht, beispielsweise eine Graphenschicht aufgesprüht.

Die Erfindung wurde anhand bevorzugter Ausführungsbeispiele erläutert, ohne auf diese Ausführungsbeispiele beschränkt zu sein. So kann beispielsweise die Formauflage auch aus Kautschuk bestehen. Die Formauflage kann ein oder mehrere metallische Schichten aufweisen, die entweder auf einer ihrer Oberflächen, oder in die Formauflage eingebettet angeordnet sind. Auch können Formauflagen hergestellt werden, die sowohl mit elektrisch leitenden Partikeln vermischt sind, als auch Metallschichten oder Metallgewebeschichten auf ihren Oberflächen und/oder in ihrem Inneren aufweisen. Die Merkmale einzelner Ausführungsbeispiels sind insoweit frei mit Merkmalen anderer Ausführungsbeispiele und/oder mit anderen Merkmalen kombinierbar, oder durch gleichwirkende andere Merkmale austauschbar, sofern Kompatibilität vorliegt und der Erfindungsgedanke dadurch nicht verlassen wird.

### Bezugszeichenliste

- 1: Vorrichtung
- 2: Erste Halbform
- 4: Zweite Halbform
- 6: Anlagefläche
- 8: Silikonform

- 10: Metallgewebe
- 12: Genarbte Schale
- 14: Formauflage
- 16: Formhautraum
- 18: Materialzuführungseinheit

- 20: Kunststoffzuführung
- 22: Vakuumkanal
- 24: Silikondichtung
- 26: Silikondichtung
- 28: Schraubenverbindung
- 29: Distanzhalter
- 30: Kunststoffschicht, 3D-Formhaut
- 32: Elektrisch leitfähige Partikel
- 34: Thermische Isolierschicht

## Patentansprüche

1. Vorrichtung (1) zum Herstellen einer Formhaut (30), insbesondere zum Herstellen einer dreidimensionalen thermoplastischen Formhaut (30), aufweisend
- ein Formwerkzeug mit einer ersten (2) und einer zweiten (4) Halbform, die gegeneinander öffen- und schließbar sind, wobei die erste Halbform (2) eine Anlagefläche (6) aufweist, die in Richtung auf die zweite Halbform (4) weist, wenn die erste Halbform (2) gegen die zweite Halbform (4) geschlossen ist,
- eine an die Anlagefläche (6) anlegbare, eine elastisch verformbaren Kunststoff aufweisende Formauflage (14),
- sowie wenigstens eine Kunststoffzuführung (20), durch welche Kunststoff in einen zwischen der Formauflage (14) und der zweiten Halbform (4) definierten Formhautraum (16) eintragbar ist, wenn die erste Halbform (2) gegen die zweite Halbform (4) geschlossen ist und die Formauflage (14) an die Anlagefläche (6) angelegt ist,
wobei zum Erzeugen eines elektrischen Feldes im Formhautraum (16) mittels Hochfrequenzstrahlung die Formauflage (14) wenigstens ein elektrischen Strom leitendes Mittel aufweist, und die zweite Halbform (4) ein elektrischen Strom leitendes Material aufweist.

2. Vorrichtung nach Anspruch 1,
**dadurch gekennzeichnet, dass**
die elastisch verformbaren Kunststoff aufweisende Formauflage (14) aus Silikon, Kautschuk oder Schaumstoff besteht.

3. Vorrichtung nach Anspruch 1 oder 2,
**dadurch gekennzeichnet, dass**
die erste Halbform (2) wenigstens eine an der Anlagefläche (6) geöffnete, wechselweise ein- oder ausschaltbare Ansaugvorrichtung aufweist, die, wenn die Formauflage (14) an die Anlagefläche (6) angelegt ist und die Ansaugvorrichtung eingeschaltet ist, die Formauflage (14) an der Anlagefläche (6) festhält.

4. Vorrichtung nach Anspruch 1, 2 oder 3,
**dadurch gekennzeichnet, dass**
die erste Halbform (2) eine Patrize ist.

5. Vorrichtung nach Anspruch 1, 2 oder 3,
**dadurch gekennzeichnet, dass**
die erste Halbform (2) eine Matrize ist.

6. Vorrichtung nach einem der vorigen Ansprüche,
**dadurch gekennzeichnet, dass**
das wenigstens eine, den elektrischen Strom leitende Mittel ein vorzugsweise aus Metall oder einer Metalllegierung bestehendes Gewebe (10) und/oder eine metallische Schicht ist.

7. Vorrichtung nach einem der vorigen Ansprüche,
**dadurch gekennzeichnet, dass**
das den elektrischen Strom leitende Mittel versilberte Partikel sind.

8. Vorrichtung nach einem der vorigen Ansprüche,
**dadurch gekennzeichnet, dass**
das wenigstens eine, den elektrischen Strom leitende Mittel auf die Formauflage aufgesprüht ist.

9. Vorrichtung nach Anspruch 6,
**dadurch gekennzeichnet, dass**
das Gewebe (10) mit elastisch verformbarem Kunststoff umgossen ist, oder dass der elastisch verformbare Kunststoff auf das Gewebe gegossen ist.

10. Vorrichtung nach einem der vorigen Ansprüche,
**dadurch gekennzeichnet, dass**
das wenigstens eine elektrischen Strom leitende Mittel wenigstens ein elektrisch leitfähiges Additiv ist, welches dem elastisch verformbaren Kunststoff beigemischt ist.

11. Vorrichtung nach einem der vorigen Ansprüche,
**dadurch gekennzeichnet, dass**
an der dem Formhautraum (16) zugewandten Seite der Formauflage (14) eine thermische Isolierschicht (34) aufgebracht ist.

12. Verfahren zum Herstellen einer Formhaut (30) unter Verwendung einer Vorrichtung nach einem der Ansprüche 1 bis 11, aufweisend die zeitlich nacheinander folgenden Verfahrensschritte:
a) Anlegen der Formauflage (14) an die zweite Halbform (4) des Formwerkzeugs,
b) Schließen der ersten Halbform (2) gegen die zweite Halbform (4) und/oder der zweiten Halbform (4) gegen die erste Halbform (2) und Bilden des Formhautraums (16) zwischen der zweiten Halbform (4) und der Formauflage (14),
c) Eintragen eines flüssigen Kunststoffmaterials durch die Kunststoffzuführung (20) in den Formhautraum (16),
d) Aufheizen des flüssigen Kunststoffmaterials in dem Formhautraum (16) mit einem mittels Hochfrequenzstrahlung erzeugten elektrischen Stromfeld bis zum vollständigen Ausreagieren des Kunststoffmaterials,
e) Abkühlen lassen des Kunststoffmaterials in dem Formhautraum (16),
f) Öffnen des Formwerkzeugs und Entnehmen der Formhaut (30) mit der Formauflage (14) aus dem Formwerkzeug,
g) Ablösen der Formauflage (14) von der Formhaut.

13. Verfahren nach Anspruch 12,
**dadurch gekennzeichnet, dass**
die wenigstens eine Ansaugvorrichtung nach dem Bilden des Formhautraums (16) und vor dem Eintragen des flüssigen Kunststoffmaterials in den Formhautraum (16) eingeschaltet wird, so daß die Formauflage (14) an der Anlagefläche festgehalten wird, während die Formhaut (30) gebildet wird.

14. Verfahren nach Anspruch 12 oder 13,
**dadurch gekennzeichnet, dass**
das Kunststoffmaterial ein Plastisol, vorzugsweise flüssiges PVC, ist.

15. Verfahren nach einem der Ansprüche 12 bis 14,
**dadurch gekennzeichnet, dass**
der Formhautraum (16) in Niederdruck gesetzt wird, bevor und/oder während das, vorzugsweise flüssige, Kunststoffmaterial in den Formhautraum (16) eingebracht wird.

16. Verfahren nach einem der Ansprüche 12 bis 15,
**dadurch gekennzeichnet, dass**
das Kunststoffmaterial ein dielektrisches Material ist, das sich in einem elektrischen Feld erwärmt, nachdem es in den Formhautraum (30) eingebracht worden ist.

17. Verfahren nach einem der Ansprüche 12 bis 16,
**dadurch gekennzeichnet, dass**
die zweite Halbform (4) eine genarbte Oberflächenstruktur aufweist, oder in die zweite Halbform eine Schale (12) mit einer genarbten Oberfläche aufgenommen wird, bevor das flüssige Kunststoffmaterial durch die Kunststoffzuführung (20) in den Formhautraum (16) zwischen die Schale (12) und die Formauflage (14) eingetragen wird.

18. Verfahren nach einem der Ansprüche 12 bis 17,
**dadurch gekennzeichnet, dass**
eine Formhaut (30) mit einer Dicke zwischen 0,5 mm und 2 mm ausgebildet wird.

## Claims

1. Device (1) for producing a moulded skin (30), in particular for producing a thermoplastic three-dimensional moulded skin (30), comprising
- a moulding tool with a first (1) and a second (4) half mould which can be opened and closed relative to each other, wherein the first half mould (2) has a contact face (6) pointing in the direction of the second half mould (4) when the first half mould (2) is closed against the second half mould (4),
- a mould cover (14) comprising elastically deformable plastic and able to be placed on the contact face (6),
- and at least one plastic feed (20) through which plastic can be introduced into a moulded skin space (16) defined between the mould cover (14) and the second half mould (4) when the first half mould (2) is closed against the second half mould (4) and the mould cover (14) is placed on the contact face (6),
wherein to produce an electrical field in the moulded skin space (16) by means of high frequency radiation, the mould cover (14) has at least one means conducting electrical current, and the second half mould (4) comprises a material conducting electrical current.

2. Device according to claim 1, **characterised in that** the mould cover (14) comprising elastically deformable plastic is made of silicon, rubber or foam.

3. Device according to claim 1 or 2, **characterised in that** the first half mould (2) has at least one suction device which is opened at the contact face (6) and is able to be switched on or off and, when the mould cover (14) is placed on the contact face (6) and the suction device is switched on, holds the mould cover (14) securely on the contact face (6).

4. Device according to claim 1, 2 or 3, **characterised in that** the first half mould (2) is a male mould.

5. Device according to claim 1, 2 or 3, **characterised in that** the first half mould (2) is a female mould.

6. Device according to any of the preceding claims, **characterised in that** the at least one means conducting electrical current is a mesh (10) consisting of metal or a metal alloy, and/or a metal coating.

7. Device according to any of the preceding claims, **characterised in that** the means conducting electrical current comprises silvered particles.

8. Device according to any of the preceding claims, **characterised in that** the at least one means conducting electrical current is sprayed onto the mould cover.

9. Device according to claim 6, **characterised in that** the mesh (10) is coated with elastically deformable plastic, or the elastically deformable plastic is cast onto the mesh.

10. Device according to any of the preceding claims, **characterised in that** the at least one means conducting electrical current is at least one electrically conductive additive which is mixed into the elastically deformable plastic.

11. Device according to any of the preceding claims, **characterised in that** a thermally insulating coating (34) is applied on the side of the mould cover (14) facing the moulded skin space (16).

12. Method for producing a moulded skin (30) using a device according to any of claims 1 to 11, comprising the following, temporally successive method steps:
a) placing the mould cover (14) on the second half mould (4) of the moulding tool,
b) closing the first half mould (2) against the second half mould (4) and/or closing the second half mould (4) against the first half mould (2), forming the moulded skin space (16) between the second half mould (4) and the mould cover (14),
c) introducing a liquid plastic material into the moulded skin space (16) through the plastic feed (20),
d) heating the liquid plastic material in the moulded skin space (16) by means of an electrical current field produced by high-frequency radiation until complete reaction of plastic material,
e) cooling of the plastic material in the moulded skin space (16),
f) opening of the moulding tool and removing the moulded skin (30) with the mould cover (14) from the moulding tool,
g) detaching the mould cover (14) from the moulded skin.

13. Method according to claim 12, **characterised in that** the at least one suction device is switched on after the moulded skin space (16) is formed and before the liquid plastic material is introduced into the moulded skin space (16), so that the mould cover (14) is securely held on the contact surface while the moulded skin (30) is being formed.

14. Method according to claim 12 or 13, **characterised in that** the plastic material is a plastisol, preferably liquid PVC.

15. Method according to any of claims 12 to 14, **characterised in that** the moulded skin space (16) is set to low pressure before and/or while the preferably liquid plastic material is introduced into the moulded skin space (16).

16. Method according to any of claims 12 to 15, **characterised in that** the plastic material is a dielectric material which warms up in the electrical field after it has been introduced into the moulded skin space (30).

17. Method according to any of claims 12 to 16, **characterised in that** the second half mould (4) has a grained surface structure, or a shell (12) with a grained surface structure is received in the second half mould before the liquid plastic material is introduced through the plastic feed (20) into the moulded skin space (16) between the shell (12) and the mould cover (14).

18. Method according to any of claims 12 to 17, **characterised in that** a moulded skin (30) with a thickness of between 0.5 mm and 2 mm is formed.

## Revendications

1. Dispositif (1) d'obtention d'une peau moulée (30), en particulier pour l'obtention d'une peau moulée thermoplastique tridimensionnelle (30) comprenant :
- un outil de moulage ayant un premier demi moule (2) et un second demi moule (4) pouvant être fermés et ouverts l'un par rapport à l'autre, le premier demi moule (2) comportant une surface de contact (6) tournée en direction du second demi moule (4) lorsque le premier demi moule (2) est fermé contre le second demi moule (4),
- une couche moulée (14) pouvant être appliquée sur la surface de contact (6) renfermant un matériau synthétique élastiquement déformable,
- ainsi qu'au moins une alimentation en matériau synthétique (20) par laquelle du matériau synthétique peut être introduit dans une chambre de peau moulée (16) définie entre la couche moulée (14) et le second demi moule (4), lorsque le premier demi moule (2) est fermé contre le second demi moule (4) et que la couche moulée (14) est appliquée sur la surface de contact (6),
- pour produire un champ électrique dans la chambre de peau moulée (16) au moyen d'un rayonnement haute fréquence, la couche moulée (14) renfermant au moins un moyen conducteur du courant électrique et le second demi moule (4) renfermant un matériau conducteur du courant électrique.

2. Dispositif conforme à la revendication 1,
**caractérisé en ce que**
la couche moulée (14) renfermant un matériau synthétique élastiquement déformable est constituée de silicone, de caoutchouc ou d'un matériau sous forme de mousse.

3. Dispositif conforme à la revendication 1 ou 2,
**caractérisé en ce que**
le premier demi moule (2) comporte au moins un dispositif d'aspiration pouvant être sélectivement branché ou débranché, ouvert sur la surface de contact et qui, lorsque la couche moulée (14) est appliquée sur la surface de contact (6) et qu'il est branché, maintien la couche moulée (14) sur la surface de contact (6).

4. Dispositif conforme à la revendication 1, 2 ou 3,
**caractérisé en ce que**
le premier demi moule (2) est un poinçon.

5. Dispositif conforme à la revendication 1, 2 ou 3,
**caractérisé en ce que**
le premier demi moule (2) est une matrice.

6. Dispositif conforme à l'une des revendications précédentes,
**caractérisé en ce que**
les moyens conduisant le courant électrique sont un tissu (10) de préférence en métal ou en un alliage métallique et/ou une couche métallique.

7. Dispositif conforme à l'une des revendications précédentes,
**caractérisé en ce que**
les moyens conduisant le courant électrique sont constitués par des particules argentées.

8. Dispositif conforme à l'une des revendications précédentes,
**caractérisé en ce que**
les moyens conduisant le courant électrique sont pulvérisés sur la couche moulée.

9. Dispositif conforme à la revendication 6,
**caractérisé en ce que**
le tissu (10) est imprégné de matériau synthétique élastiquement déformable ou le matériau synthétique élastiquement déformable est coulé sur le tissu.

10. Dispositif conforme à l'une des revendications précédentes,
**caractérisé en ce que**
les moyens conduisant le courant électrique sont au moyen un additif électriquement conducteur qui est mélangé au matériau synthétique élastiquement déformable.

11. Dispositif conforme à l'une des revendications précédentes,
**caractérisé en ce que**
sur le côté tourné vers la chambre de peau moulé (16) de la couche moulée (14) est appliquée une couche thermiquement isolante (34).

12. Procédé d'obtention d'une peau moulée (30) en utilisant un dispositif conforme à l'une des revendications 1 à 11, comprenant les étapes successives suivantes consistant à :
a) appliquer la couche moulée (14) sur le second demi moule (4) de l'outil de moulage,
b) fermer le premier demi moule (2) contre le second demi moule (4), et/ou second demi moule (4) contre le premier demi moule (2) et former la chambre de peau moulée (16) entre le second demi moule (4) et la couche moulée (14),
c) introduire dans la chambre de peau moulée (16) un matériau synthétique fluide par l'alimentation de matériau synthétique (20),
d) chauffer le matériau synthétique fluide dans la chambre de peau moulée (16) avec un champs électrique obtenu par rayonnement haute fréquence jusqu'à réaction complète du matériau synthétique,
e) refroidir le matériau synthétique dans la chambre de peau moulée (16),
f) ouvrir l'outil de moulage et extraire la peau moulée (30) avec la couche moulée (14) de l'outil de moulage,
g) détacher la couche moulée (14) de la peau moulée.

13. Procédé conforme à la revendication 12,
**caractérisé en ce que**
le dispositif d'aspiration est branché après la formation de la chambre de peau moulée (16) et avant l'introduction du matériau synthétique fluide dans la chambre de peau moulée (16) de sorte que la couche moulée (14) soit maintenue solidairement sur la surface de contact pendant le formation de la peau moulée (30).

14. Procédé conforme à la revendication 12 ou 13,
**caractérisé en ce que**
le matériau synthétique est un plastisol, de préférence un PVC fluide.

15. Procédé conforme à l'une des revendications 12 à 14,
**caractérisé en ce que**
la chambre de peau moulée (16) est placée sous basse pression avant et/ou pendant l'introduction du matériau synthétique de préférence fluide dans la chambre de peau moulée (16).

16. Procédé conforme à l'une des revendications 12 à 15,
**caractérisé en ce que**
le matériau synthétique est un matériau diélectrique qui s'échauffe dans un champ électrique après qu'il ait été introduit dans la chambre de peau moulée (30).

17. Procédé conforme à l'une des revendications 12 à 16,
**caractérisé en ce que**
le second demi moule (4) a une structure de surface grainée ou, une coque (12) ayant une surface grainée, est logée dans le second demi moule avant l'introduction du matériau synthétique fluide par l'alimentation (20) dans la chambre de peau moulée (16) entre la coque (12) et la couche moulée (14).

18. Procédé conforme à l'une des revendications 12 à 17,
**caractérisé en ce qu'**
une peau moulée (30) est formée avec une épaisseur comprise entre 0,5 mm et 2 mm.
